# EUROPÄISCHE PATENTANMELDUNG

(11) **EP 1 403 634 A1**
(43) Veröffentlichungstag der Anmeldung: **31.03.2004**
(21) Anmeldenummer: 03021604.8
(22) Anmeldetag: 24.09.2003
(51) Int. Cl.: G01N 21/55

(54) **Anordnung zur Bestimmung der spektralen Reflektivität eines Messobjektes**

(30) Priorität: 26.09.2002 DE 10245840
(71) Anmelder: Jenoptik Mikrotechnik GmbH, 07745 Jena (DE)
(72) Erfinder: Schürmann, Max Christian, Dr., 32312 Lübbecke (DE); Missalla, Thomas, Dr., 23966 Wismar (DE); Seher, Bernd, 07743 Jena (DE)
(74) Vertreter: Bertram, Helmut

(57) **Zusammenfassung**

Bei einer Anordnung zur Bestimmung der spektralen Reflektivität eines Messobjektes besteht die Aufgabe, die Messanordnung einfacher und kompakter zu gestalten und die zur Erfassung des Referenzstrahls bisher notwendige Entfernung von Elementen aus dem Strahlengang sowie komplexe Translations- und Rotationsbewegungen zu vermeiden.

Von einer Strahlungsquelle ausgehende unterschiedliche Strahlbereiche dienen als Mess- und Referenzstrahl, die gleichzeitig auf unterschiedliche spektral zerlegende Bereiche mindestens eines dipersiven Elementes und auf unterschiedliche Empfängerbereiche mindestens eines Empfängers in einem Spektrographen gerichtet sind.

Bevorzugte Messobjekte sind spektral abhängig reflektierende Oberflächen für Strahlung im extremen Ultraviolettbereich (EUV), jedoch ist die Anwendung der Anordnung nicht auf diesen Spektralbereich beschränkt.

## Beschreibung

Die Erfindung betrifft eine Anordnung zur Bestimmung der spektralen Reflektivität eines Messobjektes mit einer Strahlungsquelle zur Bestrahlung des Messobjektes und einem Spektrographen zum spektralen Strahlungsnachweis.

Ohne eine Einschränkung des mit der Anordnung zu messenden Spektralbereiches festzulegen, sind bevorzugte Messobjekte spektral abhängig reflektierende Oberflächen für Strahlung im extremen Ultraviolettbereich (EUV), welche Reflektivitäten in einem schmalen Spektralbereich aufgrund ihres Schichtenaufbaus erreichen.

Der Herstellungsprozess für derartige Optiken erfordert aussagekräftige Qualitätskontrollen, um homogene Reflexionseigenschaften gewährleisten zu können.

Bekannt ist es, die spektrale Reflektivität R(λ,θ,x,y) eines Messobjektes, die eine Funktion der Wellenlänge λ, des Einfallswinkels θ und des Ortes x,y ist und die sich als Quotient aus reflektierter Strahlintensität I(λ,θ,x,y) zu eingefallener Strahlintensität I₀(λ,θ,x,y) ergibt, mit Hilfe von Reflektometern zu bestimmen.

Eine solche Messanordnung, die beispielsweise aus der gattungsbildenden DE 199 48 264 A1 bekannt ist und auf dem polychromatischen Ansatz beruht, sieht ein Plasma zur Erzeugung einer gebündelten polychromatischen Strahlung vor, mit der das Messobjekt nach einer Kollimation breitbandig bestrahlt wird. Ferner sind Mittel zur spektralen Zerlegung der reflektierten Strahlung und ein Mehrkanaldetektor zur Erfassung der reflektierten Strahlung vorhanden.

Von Nachteil ist die bereits dort als aufwendig bezeichnete Vorgehensweise, für die Referenzmessung eine zweite, identische Einheit aus spektral zerlegendem Element und Detektor aufzubauen, um die auf direktem Weg vom Plasma kommende Strahlung zu detektieren. Die Erfassung des Mess- und des Referenzstrahls kann nur nacheinander erfolgen, wobei das Messobjekt aus dem Strahlengang entfernt und die zweite Einheit räumlich untergebracht werden muss. Keine wesentliche Verbesserung bringt die alternativ vorgeschlagene Lösung, die Einheit aus spektral zerlegendem Element und Detektor auf einem Schwenkarm zu positionieren und zur Referenzmessung um eine Achse zu drehen, da Größe und Gewicht der zu bewegenden Objekte erhebliche Schwierigkeiten bereiten. Erschwerend wirkt sich zudem aus, dass die als Drehung um eine Achse bezeichnete Bewegung vielmehr komplexer Natur ist, indem sich diese aus einer Translation und einer Rotation zusammensetzt.

Aufgabe der Erfindung ist es deshalb, die Messanordnung einfacher und kompakter zu gestalten und die zur Erfassung des Referenzstrahls bisher notwendige Entfernung von Elementen aus dem Strahlengang sowie komplexe Translations- und Rotationsbewegungen zu vermeiden.

Diese Aufgabe wird bei einer Anordnung der eingangs genannten Art dadurch gelöst, dass von der Strahlungsquelle ausgehende unterschiedliche Strahlbereiche als Mess- und Referenzstrahl dienen, die gleichzeitig auf unterschiedliche spektral zerlegende Bereiche mindestens eines dipersiven Elementes und auf unterschiedliche Empfängerbereiche mindestens eines Empfängers in dem Spektrographen gerichtet sind.

In einer bevorzugten Ausgestaltung sind die von einem gemeinsamen Emissionsgebiet ausgehenden unterschiedlichen Strahlbereiche derart ausgewählt, dass der Mess- und der Referenzstrahl mit einer Normalen auf der Oberfläche des Messobjektes gleiche Winkel mit entgegengesetztem Vorzeichen einschließen, wodurch der Mess- und der Referenzstrahl nach einer Reflexion des Messstrahls an der Oberfläche des Messobjektes in parallelen Strahlengängen verlaufen.

Vor allem ist das bei einer Strahlungsquelle von Vorteil, die mindestens in den unterschiedlichen Strahlbereichen isotrope Abstrahleigenschaften aufweist. Es reicht jedoch aus, eine vorhandene Anisotropie in den unterschiedlichen Strahlbereichen zu kennen, um entsprechende Korrekturen durch eine Eichung vornehmen zu können. Auf diese Weise wird ein Reflektometer realisiert, bei dem definierte Abstrahleigenschaften der verwendeten Strahlungsquelle genutzt werden, um gleichzeitig unterschiedliche Nachweise führen zu können.

Ferner sollte die Strahlungsquelle in ihrer Bauform klein sein, um nah an der Probe positioniert werden zu können, wodurch eine Erhöhung der Messgenauigkeit erreicht werden kann. Deshalb ist es von Vorteil, wenn die Ausdehnung der Strahlungsquelle auf ein Maß begrenzt ist, bei dem sich der Mess- und der Referenzstrahl bei benachbartem parallelen Strahlengangverlauf nicht überschneiden.

Den Anforderungen an die zu verwendende Strahlungsquelle werden weitestgehend Röntgenröhren mit einem nahezu punktförmigen Emissionsgebiet gerecht, bei denen die unterschiedlichen Strahlbereiche für den Mess- und den Referenzstrahl aus der unkollimierten Strahlung eines großen Abstrahlraumwinkels ausgewählt sind.

Eine besonders kostengünstige Ausführung der Erfindung ergibt sich, wenn sowohl die unterschiedlichen spektral zerlegenden Bereiche als auch die unterschiedlichen Empfängerbereiche als zwei benachbart zueinander liegende Bereiche auf einem dispersiven Element sowie auf einem Empfänger vorgesehen sind. Das schließt jedoch nicht aus, dass in einer anderen Ausführung zwei getrennte benachbarte dispersive Elemente und zwei getrennte benachbarte Empfänger vorgesehen sein können.

Die Erfindung soll nachstehend anhand der schematischen Zeichnung näher erläutert werden. Es zeigen:
- Fig. 1: eine Prinzipdarstellung einer erfindungsgemäßen Anordnung nach dem polychromatischen Ansatz zur Bestimmung der spektralen Reflektivität eines Messobjektes
- Fig. 2: eine Anordnung zur gleichzeitigen Bestimmung der spektralen Reflektivität bei mehreren Einfallswinkeln
- Fig. 3: die Anordnung einer Röntgenröhre mit rotierendem Target
- Fig. 4: eine Darstellung der Bewegungsrichtungen und der Kippachsen bei einer erfindungsgemäßen Anordnung zur Bestimmung der spektralen Reflektivität eines Messobjektes als Funktion der Wellenlänge, des Einfallswinkel und des Messortes

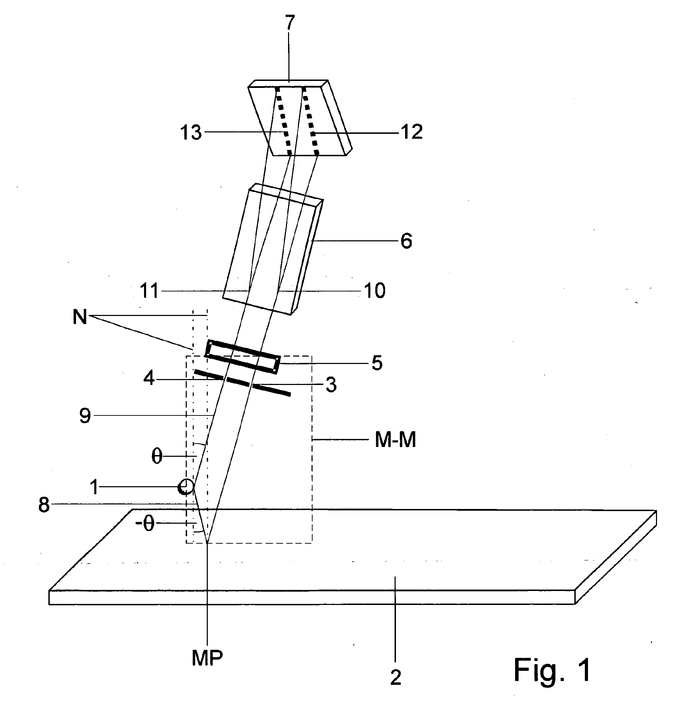

Die in Fig. 1 dargestellte Anordnung enthält eine annähernd punktförmige Strahlungsquelle 1, deren Abstrahleigenschaften idealerweise isotrop (I(θ) = const) sind, mindestens jedoch der Bedingung I (θ) = I(-θ) genügen bezüglich einer Ebene, die parallel zur Oberfläche eines in x-y-Richtung verstellbaren Messobjektes 2 verläuft und in der die Strahlungsquelle 1 liegt. Spalte 3, 4 zur Strahlbegrenzung sind einem Spektrographen vorgeordnet, der aus einem Eintrittsspalt 5, einem dispersiven Element. 6 und einem flächig ortsauflösenden Empfänger 7 besteht. Während im vorliegenden Ausführungsbeispiel als dispersives Element 6 ein Reflexionsgitter und für den Empfänger 7 ein CCD-Chip gewählt wurden, können aber auch Transmissionsgitter oder Prismen sowie MCP / MSP mit Phosphorschirm oder photographischer Film eingesetzt werden. Die Strahlungsquelle 1 ist nahe dem Messobjekt 2 derart angeordnet, dass ein Messort MP auf dessen Oberfläche mit der Strahlungsquelle 1 und dem Eintrittsspalt 5 eine zur Oberfläche des Messobjektes 2 senkrechte Messebene M-M aufspannen. Aus geometrischen Gründen, aber auch aus Intensitätsgründen, wie noch zu erläutern sein wird, ist die Nähe der Strahlungsquelle 1 zur Oberfläche des Messobjektes 2 von Bedeutung, um den sich ergebenden Strahlenversatz kleiner zu halten als die detektierende Oberfläche.
Von einem gemeinsamen Emissionsgebiet der Strahlungsquelle 1 ausgehende unterschiedliche Strahlbereiche weisen gleiche Strahlintensitäten I₀(λ) auf und dienen als Mess- und als Referenzstrahl 8, 9.

Die Strahlbereiche sind derart ausgewählt, dass der Mess- und der Referenzstrahl 8, 9 mit einer Normalen N auf der Oberfläche des Messobjektes 2 gleiche Winkel jedoch mit entgegengesetztem Vorzeichen (-θ, θ) einschließen.
Aufgrund der Geometrie der Anordnung verlaufen Mess- und Referenzstrahl 8, 9 nach der Reflexion des Messstrahls 8 an der Oberfläche des Messobjektes 2 parallel zueinander in der Messebene M-M, so dass eine spektral aufgelöste Intensitätsmessung der beiden Strahlen gleichzeitig mit einem Spektrographen möglich ist. Bei gekrümmten Messobjekten ist die Parallelität von reflektiertem Messstrahl und Referenzstrahl durch eine geeignete Ausrichtung des Messobjektes zu gewährleisten, soweit es dieses zulässt. Der Mess- und der Referenzstrahl 8, 9 sind durch die beiden Spalte 3 und 4 begrenzt, bevor sie über den Entrittspalt 5 auf zueinander benachbart liegende Bereiche 10, 11 des dispersiven Elementes 6 gerichtet werden. Zum Nachweis der spektral zerlegten Strahlung dienen zueinander benachbart liegende Bereiche 12, 13 auf dem Empfänger 7, so dass nach der Messung unter Berücksichtigung der unterschiedlichen Weglängen zur Strahlungsquelle 1 ein Mess- und ein Referenzspektrum für I(λ) und I₀(λ) vorliegen, aus denen sich die Reflektivität der Oberfläche im Messort MP als Funktion der Wellenlänge λ ergibt. Vorteilhaft weist der Empfänger 7 einen Matrixaufbau auf, bei dem verschiedene Matrizenteile für die unterschiedlichen Bereiche 12 und 13 vorgesehen sind. Unter Umständen bietet es sich jedoch an, zwei getrennte Empfänger oder auch zwei Gitter als dispersive Elemente zu verwenden, mit denen die Aufnahme der beiden Spektren aber nach wie vor gleichzeitig erfolgt.

Der messbare Wellenlängenbereich λ ± Δλ ergibt sich aus dem Emissionsspektrum der Strahlungsquelle 1 und der spektralen Empfindlichkeit des verwendeten Spektrographen. Durch eine x-y-Translation des Messobjektes 2 kann die Reflektivität an verschiedenen Messorten MPi bestimmt werden, wobei gekrümmte Oberflächen zusätzlich eine Verkippung des Messobjektes 2 um zwei Achsen erfordern.
Prinzipiell kann mit der erfindungsgemäßen Anordnung die spektrale Reflektivität bei unterschiedlichen Einfallswinkeln (0°< θ < 90°) gemessen werden, indem der Spektrograph im Winkel θ zur Normalen N ausgerichtet wird. Pro Messung ergibt sich damit die Reflektivität R(λ) für einen Einfallswinkel θ.

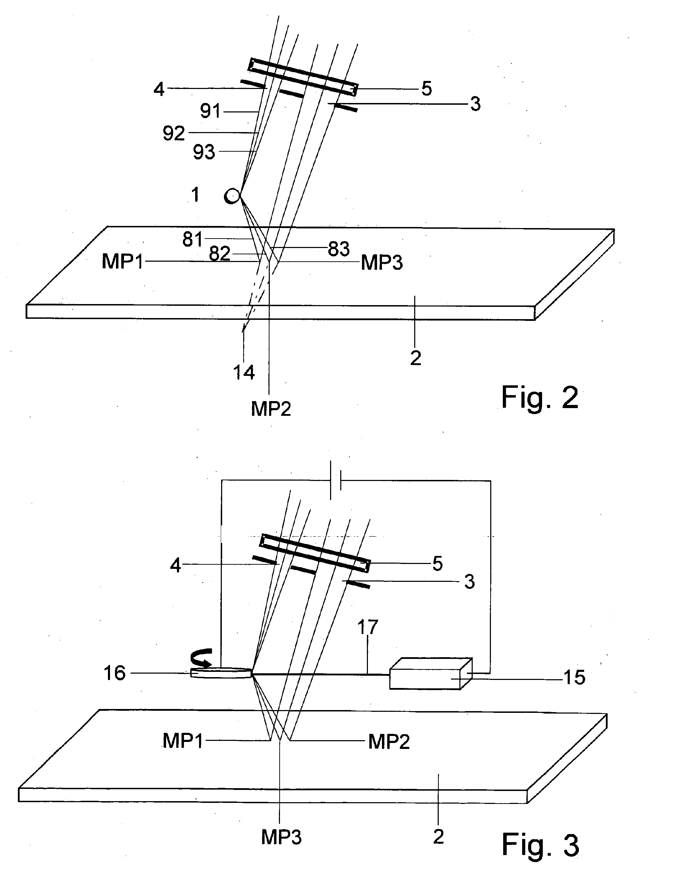

Wird dagegen eine Anordnung gemäß Fig. 2 verwendet und lässt der Spektrograph eine winkelaufgelöste Messung zu, erhält man bereits mit einer Messung die spektrale Reflektivität R(λ) für mehrere Winkel θᵢ.

Die aus der Strahlungsquelle 1 in verschiedenen Winkeln -θᵢ (hier: i = 1, 2, 3) austretenden Messstrahlen 81, 82, 83 treffen an verschiedenen Messorten MP1(x₁,y), MP2(x₂,y) und MP3(x₃,y) in den Einfallswinkeln θᵢ auf das Messobjekt 2 auf und werden mit den gleichen Winkeln reflektiert. Werden die Spalte 3, 4 zur Strahlbegrenzung vergrößert, so können die reflektierten Messstrahlen 81, 82 und 83 aus der virtuellen Strahlungsquelle 14 kommend in einem Einfallswinkelbereich θ ± Δθ gleichzeitig im Spektrographen erfasst werden. Analog können die Referenzstrahlen 91, 92 und 93 erfasst werden, die die Strahlungsquelle 1 unter den Winkeln θᵢ verlassen. Im Fall einer isotropen Strahlungsquelle genügt die Messung eines Referenzstrahls. Unter Berücksichtigung der Strahlweglängen können die spektralen Strahlungsintensitäten I(λ,θᵢ) und I₀(λ,θᵢ) ermittelt werden, aus denen sich die Reflektivität R_{θ} (λ,θᵢ) im Einfallswinkelbereich θ ± Δθ als Funktion der Wellenlänge λ ergibt. Allerdings ist die Reflektivität R_{θ} (λ,θᵢ) für verschiedene Einfallswinkel θᵢ den unterschiedlichen Messorten MP1(x₁,y), MP2(x₂, y) und MP3(x₃,y) zugeordnet. Soll die Reflektivität als Funktion der Wellenlänge, des Einfallswinkels und des Ortes bestimmt werden, so muss über die Oberfläche des Messobjektes 2 gescannt werden.

Die Größe des zu erfassenden Einfallswinkelbereiches θ ± Δθ hängt von den Eigenschaften des verwendeten Spektrographen ab, wobei die zu erfassenden Winkelbereiche durch die Breite der Spalte zur Strahlbegrenzung 3, 4 eingestellt werden, um eine Vermischung der Mess- und Referenzspektren auf dem Empfänger 7 zu vermeiden. Prinzipiell ist der Einfallswinkelbereich einer Strahlungsquelle mit isotropen Abstrahleigenschaften in Bezug auf die Strahlungsintensität I₀(λ) doppelt so groß wie bei einer Strahlungsquelle, die der Bedingung I(θ) = I(-θ) genügt, da im letzteren Fall die Hälfte des Winkelbereiches zur Aufnahme der Referenzspektren benötigt wird.
Im Fall gekrümmter (und damit abbildender) Messobjekte können die detektierbaren Winkelbereiche weiteren Einschränkungen unterworfen sein.

Ist der Spalt 4 zur Begrenzung der Referenzstrahlen hinreichend klein, so ergibt sich eine Spaltabbildung der Strahlungsquelle 1 auf dem Empfänger 7, aus der die Größe der Strahlungsquelle 1 bestimmt werden kann. Werden die Spalte 3 und 4 zur Strahlbegrenzung aus den Strahlengängen entfernt und die Messstrahlen blockiert (z. B. auch, indem die Probe aus dem Messbereich gefahren wird), kann die Emission der Strahlungsquelle 1 in einem Teil der Messhalbebene untersucht werden, so dass die wesentlichen Eigenschaften der Strahlungsquelle 1, wie Quellgröße, Isotropie der Emission und das Emissionsspektrum innerhalb der Anordnung zu ermitteln sind.
Die für die Erfindung in Frage kommenden Strahlungsquellen sind z. B. Röntgenröhren, bei denen der Elementarprozess der Emission isotroper Natur ist und sich etwaige Anisotropien höchstens aus der Geometrie der Targetoberfläche ergeben. Da das Emissionsgebiet einer solchen Röntgenröhre durch den Durchmesser des auftreffenden Elektronenstrahls bestimmt wird, kann dieses entsprechend klein und nahezu punktförmig ausgebildet werden.

Vorteilhaft verfügen solche Röntgenröhren zumindest abschnittsweise über ein kontinuierliches Emissionsspektrum, dessen Wellenlängenbereich durch die Wahl eines geeigneten Targetmaterials realisiert werden kann. (Linienstrahler würden die erreichbare Messgenauigkeit reduzieren.) Der notwendige Vakuumbetrieb ist keine Einschränkung, da in einem interessierenden Wellenlängenbereich von z. B. 1 nm - 100 nm, eine Strahlführung ohnehin im Vakuum durchgeführt werden muss.

Von Bedeutung ist es, dass für diese hinreichend kleinen Strahlungsquellen Standardlösungen verfügbar sind, die gekühlte oder rotierende Targets aufweisen und keine schädigenden Einflüsse durch eine Partikelemission auf das Messobjekt ausüben, wie etwa eine Plasmastrahlungsquelle, wodurch eine für die Erfindung notwendige nahe Positionierung am Messobjekt gewährleistet ist. Infolge des großen nutzbaren Raumwinkelanteils der Emission kann so auch eine relative Lichtschwachheit ausgeglichen und mit höheren Intensitäten gemessen werden.

Eine zweckmäßig angeordnete Röntgenröhre besteht gemäß Fig. 3 aus einer Elektronenstrahlquelle 15 und einem rotierenden Target 16, welches als flache Scheibe die Anode bildet. Die Rotation verhindert eine zu starke Erhitzung des Targets 16 am seitlichen Ort des Auftreffens des von der Elektronenstrahlquelle 15 emittierten Elektronenstrahls 17. Zusätzliche kann selbstverständlich auch eine Kühlung vorgesehen sein. Durch eine Parallelität der Rotationsebene des Targets 16 zur Oberfläche des Messobjektes 2 wird der erforderliche geringe gegenseitige Abstand gewährleistet.
Nützlich kann es sein, die Targetscheibe an ihrer Stirnfläche z. B. toroidal oder spitz zulaufend auszubilden, um den Elektronenstrahl 17 stärker zu bündeln und so das Emissionsgebiet zu verkleinern. Die Formung der Stirnfläche kann auch dazu genutzt werden, die Isotropie der Strahlungsemission zu unterstützen.
Vorteilhaft ist auch eine Anordnung der Elektronenstrahlquelle 15 außerhalb der Messebene M-M, da der messbare Winkelbereich nicht durch eine teilweise Blockierung eingeschränkt wird.

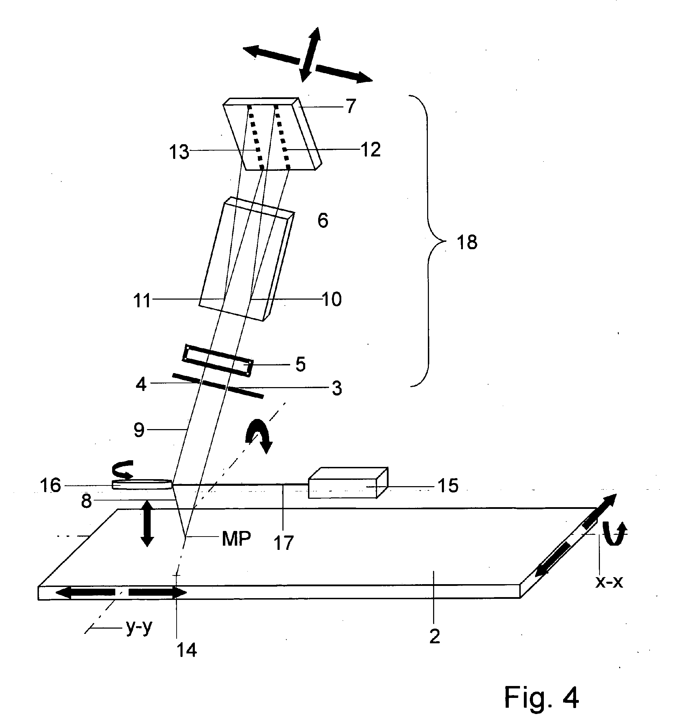

Die in Fig. 4 dargestellte Anordnung ist für Messungen der Reflektivität in einem bevorzugten Wellenlängenbereich von 1 nm < λ < 100 nm, für Einfallswinkels von 0° < θ < 90° sowie in Bezug auf einen Messort Mᵢ auf der Oberfläche des Messobjektes 2 vorgesehen.

Für diese Aufgaben ist der Spektrograph 18 zum einen schwenkbar um die virtuelle Strahlungsquelle 14 angeordnet, um die verschiedenen Einfallswinkelbereiche messen zu können. Der Abstand des Eintrittsspaltes 5 zur Oberfläche des Messobjektes 2 wird zur Erhöhung der Lichtstärke so klein wie möglich gewählt. Da dieser Mindestabstand vom Einfallswinkel abhängt, wird der Spektrograph 18 zusätzlich in der durch die Pfeilmarkierungen dargestellten Weise linear verschiebbar gehaltert. Die als Strahlungsquelle dienende Röntgenröhre mit rotierendem Target 16 ist fest angebracht, wogegen das Messobjekt 2, ebenfalls durch Pfeilmarkierungen verdeutlicht, je nach Messanforderung in der Ebene der Messobjektoberfläche (bei ebenen Messobjekten) oder in den drei Raumrichtungen mit Kippungen um zwei zueinander senkrechte Achsen x-x und y-y (bei Messobjekten mit gekrümmter Oberfläche) translatorisch bzw. rotatorisch verstellbar ist.

Die Reflektivität der Oberfläche des Messobjektes 2 wird aus den gemessenen Spektren unter der Berücksichtigung der Geometrie der Anordnung (Positionen, Winkel, Abstände...) berechnet. Bei Strahlungsquellen, die weder isotrop sind noch der Bedingung I(θ) = I(-θ) genügen, ist eine der Messung vorangestellte Eichung erforderlich.

Der für die erfindungsgemäße Anordnung vorgesehene Spektrograph ist von großer Bedeutung. Für den bevorzugten Wellenlängenbereich kommen, je nach Konfiguration des Spektrographen, sehr dünne Transmissionsgitter oder Reflexionsgitter im streifenden Einfall als dispersive Elemente in Frage, wobei abbildende Reflexionsgitter aufgrund einer größeren Lichtstärke und einer höheren Auflösung den Transmissionsgittern überlegen sind.

Die aus diesen Reflexionsgittern resultierende Anordnung des Spektrographen 18 ist in sich starr, d. h. der Eintrittsspalt 5, das dispersive Element 6 und der Empfänger 7 sind an festen Positionen zueinander angeordnet. Außerdem ermöglichen die Reflexionsgitter zusammen mit flächigen Empfängern die winkelauflösende Spektroskopie, die für die beschriebene Erweiterung des Reflektometerkonzeptes gemäß Fig. 2 notwendig ist.
Als flächige Empfänger bieten sich gedünnte, rückseitig belichtete CCD-Empfänger an. Diese sind im bevorzugten Wellenlängenbereich sehr empfindlich und können zusätzlich lange belichtet werden, um auch geringe Intensitäten messen zu können. Dieser Empfänger-Typ macht gegebenenfalls einen Strahlunterbrecher im Strahlgang erforderlich, da der CCD-Empfänger üblicherweise im sogenannten Slow-Scan-Modus ausgelesen wird, um das Ausleserauschen zu minimieren (typischerweise einige Sekunden Dauer) und in dieser Zeit weiter belichtet wird.
Ist die Belichtungszeit lang gegenüber der Auslesezeit, was vor allem von der Intensität der Strahlungsquelle abhängt, kann auf einen Strahlunterbrecher verzichtet werden, da der Fehler durch die weitere Belichtung während des Auslesens hinreichend klein wird.

## Patentansprüche

1. Anordnung zur Bestimmung der spektralen Reflektivität eines Messobjektes mit einer Strahlungsquelle zur Bestrahlung des Messobjektes und einem Spektrographen zum spektralen Strahlungsnachweis, **dadurch gekennzeichnet, dass** von der Strahlungsquelle (1) ausgehende unterschiedliche Strahlbereiche als Messund Referenzstrahl (8, 9) dienen, die gleichzeitig auf unterschiedliche spektral zerlegende Bereiche mindestens eines dipersiven Elementes und auf unterschiedliche Empfängerbereiche mindestens eines Empfängers in dem Spektrographen gerichtet sind.

2. Anordnung nach Anspruch 1, **dadurch gekennzeichnet, dass** die von einem gemeinsamen Emissionsgebiet ausgehenden unterschiedlichen Strahlbereiche derart ausgewählt sind, dass der Mess- und der Referenzstrahl (8, 9) mit einer Normalen (N) auf der Oberfläche des Messobjektes (2) gleiche Winkel mit entgegengesetztem Vorzeichen (-θ, θ) einschließen, wodurch der Mess- und der Referenzstrahl (8, 9) nach einer Reflexion des Messstrahles 8 an der Oberfläche des Messobjektes (2) in parallelen Strahlengängen verlaufen.

3. Anordnung nach Anspruch 1 oder 2, **dadurch gekennzeichnet, dass** die Strahlungsquelle (1) in den unterschiedlichen Strahlbereichen bekannte Abstrahleigenschaften aufweist.

4. Anordnung nach Anspruch 1 oder 2, **dadurch gekennzeichnet, dass** die Strahlungsquelle (1) zumindest in den unterschiedlichen Strahlbereichen isotrope Abstrahleigenschaften aufweist.

5. Anordnung nach Anspruch 3 oder 4, **dadurch gekennzeichnet, dass** die Ausdehnung der Strahlungsquelle (1) auf ein Maß begrenzt ist, bei dem sich der Mess- und der Referenzstrahl (8, 9) bei benachbartem parallelen Strahlengangverlauf nicht überschneiden.

6. Anordnung nach Anspruch 5, **dadurch gekennzeichnet, dass** als Strahlungsquelle (1) eine Röntgenröhre dient, deren unkollimierte Strahlung für den Mess- und den Referenzstrahl (8, 9) genutzt wird.

7. Anordnung nach Anspruch 6, **dadurch gekennzeichnet, dass** die Röntgenröhre als Anode eine rotierende Targetscheibe (16) enthält, deren Rotationsebene parallel zur Oberfläche des Messobjektes (2) verläuft.

8. Anordnung nach Anspruch 7, **dadurch gekennzeichnet, dass** die Targetscheibe (16) zur Verkleinerung des Emissionsgebietes an ihrer Stirnfläche sich verjüngend ausgebildet ist.

9. Anordnung nach einem der Ansprüche 1 bis 8, **dadurch gekennzeichnet, dass** die unterschiedlichen spektral zerlegenden Bereiche und die unterschiedlichen Empfängerbereiche als zwei benachbart zueinander liegende Bereiche (10, 11, 12, 13) auf einem dispersiven Element (6) sowie auf einem Empfänger (7) vorgesehen sind.

10. Anordnung nach einem der Ansprüche 1 bis 8, **dadurch gekennzeichnet, dass** die unterschiedlichen spektral zerlegenden Bereiche und die unterschiedlichen Empfängerbereiche als zwei getrennte benachbarte dispersive Elemente und zwei getrennte benachbarte Empfänger vorgesehen sind.
